# EUROPEAN PATENT APPLICATION

(11) **EP 1 215 902 A2**
(43) Date of publication of application: **19.06.2002**
(21) Application number: 01129425.3
(22) Date of filing: 10.12.2001
(51) Int. Cl.: H04N 7/16

(54) **Interactive television schema**

(30) Priority: 11.12.2000 US 734973
(71) Applicant: Web TV Networks Inc., Mountain View, California 94043 (US)
(72) Inventor: Panabaker, Ruston, Mountain View, California 94043 (US)
(74) Representative: Grünecker, Kinkeldey, Stockmair & Schwanhäusser Anwaltssozietät

(57) **Abstract**

A method for delivering enhanced programming content to a receiver module that displays the enhanced programming content. The method includes accessing a schema document that defines instructions and control parameters that identify one or more of: (i) the availability of enhanced programming or enhanced programming content; (ii) where the enhanced programming or programming content is stored; (iii) when the enhanced programming or programming content is to be delivered to a receiver module; and (iv) what enhanced programming or programming content is to be delivered to a receiver module. The method further includes analyzing the schema to retrieve the control parameters from the schema document. In response to analyzing the schema document, the enhanced programming or programming content is delivered to a receiver module for presentation to the viewer.

## Description

### BACKGROUND OF THE INVENTION

### 1. The Field of the Invention

The present invention relates to systems and methods for generating enhanced programming or enhanced programming content. More specifically, the present invention relates to systems and methods for providing a structured schema for the development and delivery of enhanced programming or enhanced programming content.

### 2. The Prior State of the Art

For numerous years, homes, offices and other buildings have accessed television programming through airwave broadcasts, cable providers, satellite transmission, and other communication channels. Televisions provide viewers with a varied assortment of entertainment, news, and educational programming. From the first broadcasts to current television programming, viewers may gather a wealth of knowledge, while being entertained. With advances in communication technology and computer systems in recent years, television broadcast viewers no longer are limited to merely watching a television screen. Instead, television viewers may watch programming on a computer monitor or display or using an advanced set-top box appliance affording computer like functionality, while performing a variety of other tasks, such as word processing, surfing the Internet, playing games, and the like.

Of particular interest, in recent years there has been an explosion with the availability of enhanced programming experiences associated with traditional television broadcast programming. Such enhanced programming experiences allow viewers to interact with or "feel" a part of the television broadcast. For example, the enhanced programming or enhanced programming content may allow a viewer to "play-along" with participants in a game show by simultaneously answering questions and accumulating points, money, prizes, and the like. Additionally, current enhanced programming experiences allow viewers to obtain a more thorough understanding of a particular television broadcast. This may be achieved by connecting with a web site that has information relevant to the television broadcast, for example connecting to a sport related web site to obtain a baseball player's statistics. This enhanced programming content may or may not be created specifically for video and audio programming, and may or may not have elements which are synchronized to the linear video programming. Numerous attempts have been made to provide enhanced programming or enhanced programming content, such as interactivity, in a straightforward and efficient manner. From the initial development of enhanced programming experiences, manufacturers and providers have attempted to develop hardware and software to give a television broadcast viewer an interactive experience. Such enhanced programming experience may eliminate the television broadcast or combine enhanced programming or enhanced programming content with the television broadcast.

Typically, the hardware and software modules capable of delivering and displaying such enhanced programming or enhanced programming content are specific to a particular manufacturer and/or programming or content provider. Similarly, the format of the enhanced programming or enhanced programming content is limited by the specification of the hardware and software modules used to deliver and display the enhanced programming or enhanced programming content. Further, each enhanced programming format is configured for the specific network upon which the data was transmitted. For example, formats for enhanced programming and enhanced programming content developed for European television and satellite systems are incapable of operating on United States of America cable and satellite systems. Consequently, a viewer is currently limited in their enhanced programming experiences by limitations associated with the allowable programming format of the television broadcast provider and the equipment that may receive such programming. In addition, enhanced programming authors must create enhanced programming or enhanced programming content in a variety of different formats so that the programming or content may be supplied by different providers and viewed through different manufacturer's equipment.

In light of the above, it would be desirable to obtain an enhanced programming standard that allows authors of enhanced programming or enhanced programming content to develop the same within a framework that is transportable between different hardware and software modules and networks or systems used to provide an enhanced programming experience.

### SUMMARY OF THE INVENTION

The present invention is directed to a schema that defines an enhanced programming experience in a simple and efficient manner. Among other things, the schema provides a framework within which an author may develop a multi-platform enhanced programming experience. The schema preferably conforms with enhanced programming standards related to the Advanced Television Enhanced Forum, while permitting enhanced programming to be experienced over a variety of different communication networks.

In one embodiment, a receiver module is configured to display programming to a viewer and provide an enhanced programming experience to the viewer. The receiver module incorporates a management system to control delivery of the enhanced programming experience and a display unit or device that displays the programming or enhanced programming or enhanced programming content to a viewer.

The enhanced programming experience may allow a viewer to interact with programming, such as "playing along" with a game show. A schema that is stored in a schema document defines this experience. The schema defines control parameters and data structures that identify (i) the availability of enhanced programming or enhanced programming content, (ii) where the enhanced programming or programming content is stored, (iii) when the enhanced programming or programming content is to be delivered, and/or (iv) what enhanced programming or programming content is to be delivered.

In another embodiment, an interactive module acts as an authoring tool for developing enhanced programming content associated with an enhanced programming experience. The interactive module includes a data storage module for storing enhanced programming or enhanced programming content, applications, and the like. Further, the interactive module includes an application module that acts as an authoring tool to create enhanced programming experiences. In addition, the application module retrieves stored enhanced programming or enhanced programming content from the data storage module and prepare such enhanced programming or enhanced programming content for delivery to the viewer. In this manner, the application module provides dual functionality by authoring enhanced programming or enhanced programming content and preparing enhanced programming or enhanced programming content for delivery to a viewer.

According to another aspect, the invention relates to numerous methods for creating a schema document or file containing enhanced programming or enhanced programming content. Additionally, numerous methods for delivering enhanced programming or enhanced programming content based upon the schema are provided. Illustratively, one method includes a step for retrieving a schema document that includes at least one of an announcement, a trigger, and a package. Each of the announcement, trigger, and package has a different data structure, such as an announcement data structure, a trigger data structure, and a package data structure. The method further includes a step for generating a timeline from the schema document. Such a timeline incorporates a schedule or list that defines delivery times for the delivery of one or more of the announcements, the triggers, and the packages to the receiver module. Optionally, substituted for the generating step may be a retrieving or accessing step when the schema document includes a timeline. Following the creation of the timeline, the method may entail a step for delivering at least one of announcement, trigger, and package to the receiver.

Alternatively, the method includes a step for generating a carousel from the schema document. The carousel incorporates a list of when at least one of the announcement, the trigger, and the package are deliverable to the receiver module. When a carousel is used as part of the method steps, the present invention may include a step of delivering the announcement, the trigger, and the package within the substantially shortest time possible based upon the communication line connection and the enhanced programming experience to be delivered to the receiver module. As with the step of generating the timeline, the step of generating the carousel may be substituted by a retrieving or accessing step when the schema document includes a carousel.

According to another aspect of the present invention, the schema document or file is verified against a master or standardized schema document to determine the authenticity and structure of the document.

In this manner, the invention provides schemas, systems, and methods for creating, retrieving, and displaying an enhanced programming experience no matter the type of communication line connection or hardware and/or software modules employed to create, deliver, and display the enhanced programming experience.

### BRIEF DESCRIPTION OF THE DRAWINGS

In order to describe the manner in which the above-recited and other advantages and features of the invention can be obtained, a more particular description of the invention briefly described above will be rendered by reference to specific embodiments thereof which are illustrated in the appended drawings. Understanding that these drawings depict only typical embodiments of the invention and are not therefore to be considered to be limiting of its scope, the invention will be described and explained with additional specificity and detail through the use of the accompanying drawings in which:
Figure 1 illustrates an exemplary system that is capable of receiving the enhanced programming content in accordance with the schema of the present invention and providing an enhanced programming experience to a viewer;
Figure 2 is a generalized illustration of the exemplary system of Figure 1;
Figure 3 illustrates a more detailed representation of the exemplary system of Figure 2;
Figure 4 is a more detailed illustration of an application module of the system depicted in Figure 2;
Figure 5 depicts a visual representation of an enhanced programming experience defined by the schema of the present invention and deliverable by the system of Figures 1-4; and
Figure 6 illustrates a flow diagram representing the flow of data in the system depicted in Figures 1-4.

### DETAILED DESCRIPTION OF THE INVENTION

The present invention extends to a structured schema for the development and delivery of enhanced programming or enhanced programming content. Such schema may be used by a variety of systems and methods that provide a viewer with an enhanced programming experience, while creating a framework within which enhanced programming or enhanced programming content authors may develop such programming or content that is applicable for delivery to and display by a variety of hardware and software modules. The use of the terms "enhanced programming" or "enhanced programming content" are interchangeable and may be considered as both describing the data and information associated with an enhanced programming experience.

It may be understood that the systems and schemas of the present invention may comprise or be used with one or more special purpose or general purpose computers including various hardware and software modules, as discussed in greater herein. Illustratively, set-top boxes and other receivers that enhance the capabilities of conventional televisions, i.e., provide a viewer with an enhanced programming experience, represent an example of a special purpose computer. The embodiments may further comprise multiple computers linked in a networked environment, whether such computers provide similar or different functionality or capabilities.

Embodiments within the scope of the present invention also include computer-readable media for carrying or having computer-executable instructions or data structures stored thereon. Such computer-executable instructions may comprise, for example, instructions and data that cause a general purpose computer, special purpose computer, or special purpose processing device to perform a certain function or group of functions. Hence, computer-readable media may be any available media accessible by a general purpose or special purpose computer. By way of example, and not limitation, such computer-readable media may comprise physical storage media such as RAM, ROM, EEPROM, CD-ROM or other optical disk storage, magnetic disk storage or other magnetic storage devices, or any other medium that carries or stores desired program code means in the form of computer-executable instructions or data structures and is accessible by a general purpose or special purpose computer. When information is transferred or provided over a network or another communications connection (either hardwired, wireless, or a combination of hardwired or wireless) to a computer, the computer properly views the connection as a computer-readable medium. Thus, such a connection is also properly termed a computer-readable medium. Further, combinations of the above are also included within the scope of computer-readable media.

The present invention will be described in the general context of computer-executable instructions, such as program modules that may be incorporated within the illustrative schema used to author and provide enhanced programming content to a viewer via, set-top boxes, receivers or other computers. Generally, program modules include routines, programs, objects, components, data structures, etc. that perform particular tasks or implement particular abstract data types. Computer-executable instructions, associated data structures, and program modules represent examples of program code means for executing steps of the methods disclosed herein. The particular sequence of such executable instructions or associated data structures represents examples of corresponding acts for implementing the functions described in such steps.

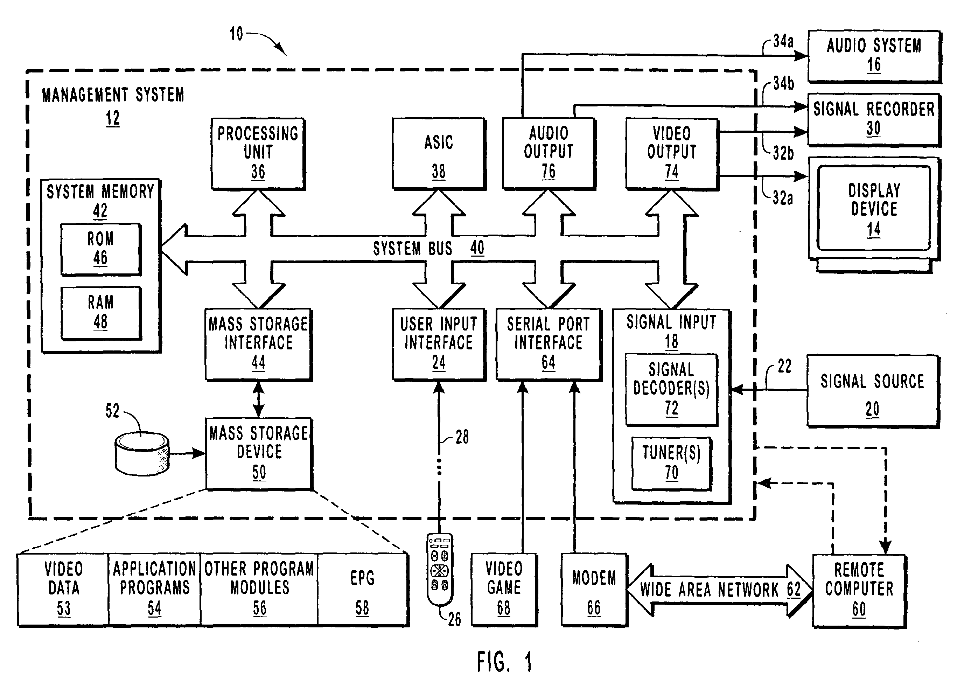

Figure 1 and the corresponding discussion are intended to provide a general description of an illustrative suitable environment in which the invention may be implemented. In the discussion, reference is made to a home entertainment system that may be used for displaying and/or recording programming. For purposes of this description and in the claims, a "home entertainment system" may be a display unit, such as a television screen, coupled to a processing device for performing the data processing steps disclosed herein, or may include any number of interconnected consumer electronic devices. Illustratively, one or more of the consumer electronics has a processing device for performing the data processing steps and methods disclosed herein. Examples of such consumer electronic devices include a video cassette recorder ("VCR"), a video game system, a stereo system, a television or monitor with data processing capabilities, a cable television box, a digital satellite system receiver ("DSS"), a digital video broadcasting system ("DVB"), Multimedia Home Platform ("MHP"), a digital versatile disc system ("DVD"), a set-top box that serves as an Internet terminal, and any other device capable of processing data or performing the methods as described herein. Furthermore, the term "home entertainment system" is to be understood as a term that broadly describes a television-viewing environment, whether it is located in a viewer's home, at a place of business, in the public, or at any other location. Also for purposes of this description and in the claims, the term "programming" includes both the viewable portions of moving image data and sound data, which is optionally presented to a viewer with the viewable portions of moving image data.

In one embodiment, the present invention is implemented in a system that uses a conventional television screen or other display unit to display information and optionally includes a reviewer adapted to obtain programming and/or enhanced programming content or a WebTV® set-top box or a similar Internet terminal that has been adapted to perform the operations that include composing, sending and receiving email, browsing the World Wide Web ("Web"), accessing other segments of the Internet, and otherwise displaying information. An Internet terminal typically uses standard telephone lines, Integrated Services Digital Network (ISDN) lines, cable lines associated with cable television service, or the like to connect to the Internet or other wide area networks.

Figure 1 illustrates a home entertainment system 10 that includes a management system 12, a display device 14 and an audio system 16. Management system 14 may be a receiver or a set-top box or Internet terminal that has been adapted to perform the operations disclosed herein and use the schema of the present invention. Management system 12 may be integrally positioned with or separate from display device 14, which may be a high definition television display, a standard television display, a flat panel display, a projection device, a high definition television display, a computer monitor, or any other device capable of displaying viewable video image data. Audio system 16 may be a speaker, a stereo system, or any device capable of emitting sound data, and similarly may be integrally positioned with or separate from display device 14.

Management system 12 includes, in one embodiment, a signal input 18, which receives programming from a signal source 20. The programming is transmitted from signal source 20 to signal input 18 via a programming input line 22, which may be a cable or optic connection, a terrestrial antenna system, a satellite system, or any device or system capable of transmitting programming to home management system 12.

The signal source 20 may be either a single channel signal source or a multiple channel signal source. A single channel signal source provides programming from a recorded medium, such as a videocassette, compact disc, etc. Examples of a single channel signal source include a VCR, a DVD, and the like. Alternatively, a multiple channel signal source includes any system or device that is capable of sending a signal that may be received by a satellite receiver, a cable or optic connection, a terrestrial antenna, or the like. Examples of a multiple channel signal source include DSS/DVB, a cable box, locally broadcast programming (i.e. programming broadcast using UHF or VHF), and the like.

While Figure 1 illustrates home entertainment system 10 as having a single programming input line 22 and a single signal source 20, there can instead be a plurality of programming input lines that transmit programming from a plurality of signal sources. In such embodiments, the home entertainment system may receive the programming from one signal source or from a plurality of signal sources at a time.

Management system 12 also includes a user input interface 24, which receives input from an input device 26, such as a remote control, keyboard, microphone, or any other device capable of generating instructions, such as electronic instructions, for management system 12. Input device 26 may communicatively couple with management system 12 over an input link 28 so as to enable input device 26 to control home entertainment system 10. Input device 26 generates instructions over input link 28 in response to either preprogrammed data or in response to a viewer pressing buttons on input device 26. Input device 26 may optionally control Web browser software within management system 12 when management system 12 is a receiver or set-top box or an Internet terminal that is adapted to perform the operations disclosed herein. For instance, input device 26 may be programmed to turn on home entertainment system 10 and to tune management system 12 to a channel.

Figure 1 illustrates a signal recorder 30, which is capable of receiving video and/or audio data and recording the data on a storage medium. Video signals are transmitted to signal recorder 30 and/or display device 14 by a video image link 32, examples of which include a radio-frequency ("RF") link, an S-video link, a composite link, or any other equivalent form of video image link. Similarly, audio link 34 transmits audio data from management system 12 to audio system 16 or to signal recorder 30.

In one embodiment, the operation of management system 12 is controlled by a central processing unit ("CPU") illustrated as processing unit 36, which uses computer-executable instructions implemented in software and/or hardwired logic circuitry. As shown, an application-specific integrated circuit ("ASIC") 38 is coupled to processing unit 36. Processing unit 36 and ASIC 38 may be coupled via a system bus 40, which interconnects various other system components. For example, the system components may include system memory 42, mass storage interface 44, user interface 24 and signal input 18. Processing unit 36 may execute software designed to implement features of management system 12 including one or more features of the present invention. ASIC 38, optionally, contains circuitry that is used to implement certain functions of management system 12. Instructions, data, and other software for the operation of processing unit 36 and ASIC 38 may be stored in system memory 42, such as in read-only memory ("ROM") 46, in random-access memory ("RAM") 48, and/or in a mass storage device 50. Such memory 42, 46, and 48 may be coupled to mass storage interface 44. ROM 46, RAM 48 and mass storage device 50 may be communicatively coupled to ASIC 38 so as to be readable by ASIC 38, and to allow data to be written from ASIC 38 to RAM 48 and possibly mass storage device 50.

Mass storage device 50 may be a magnetic hard disk 52 or any other magnetic or optical mass memory device that is capable of storing large amounts of data. Any desired computer-readable instructions or data, including application programs 54, other program modules 56, and an electronic programming guide ("EPG") 58, which specifies the broadcast times and channels of programs can be stored in mass storage device 50.

EPG data may be obtained in a variety of manners, as known by one skilled in the art. For instance, the EPG data can be supplied to management system 12 by a remote computer 60, such as a server, and stored on mass storage device 50. Optionally, the EPG data is supplied on a regular basis to maintain a current schedule of programming at management system 12. Where home entertainment system 12 is associated with the Internet, the EPG data may be downloaded directly from one or more hardware modules, such as servers or other clients, accessible via the Internet. Alternatively, the EPG may delivered to the home entertainment system by using a direct-dial communication over standard telephone lines or by using data transmission over the cable television infrastructure, a satellite network, an over-the-air broadcasting or any other available medium.

In the embodiment where management system 12 is associated with the Internet or from other wider area network (WAN) 62 or local area network (LAN) management system 12 optionally communicates with a remote computer 60 by a serial port interface 64 interposed between system bus 40 and a modem 66, a wireless link, or some other means for establishing communications between management system 12 and remote computer 60. Management device 12 may, optionally, transmit information via the Internet by direct-dial communication over standard telephone lines or by using any other available communication medium.

While serial port interface 64 may be utilized to connect modem 66 for communicating with remote computer 60 across a WAN, serial port interface 64 may also be utilized to connect other consumer electronic devices, such as video game 68, and/or various input devices, such as a keyboard (not shown) or joystick (not shown), to management device 12.

Generally, remote computer 60 may take the form of a conventional computer that includes a processing unit, a system memory (including RAM, ROM, BIOS, etc.), and a system bus that connects the various system components including the system memory to a processing unit. The system bus may be of any type of bus structure known to those skilled in the art, such as but not limited to, a memory bus, a peripheral bus, a local bus using any of a variety of bus architectures and the like.

Optionally, remote computer 60 may include a magnetic hard disc drive for reading from and writing to a magnet hard disc, a magnetic disc drive for reading from or writing to a removable magnetic disc, and an optical disc drive for reading from or writing to a removable optical disc, such as a CD-ROM, DVD, or other optical media. Although the example environment described herein employs such drives, other types of computer readable media for storing data can be used, including magnetic cassettes, flash memory cards, digital video discs, Bernoulli cartridges, RAMs, ROMs, and the like. The drives described herein may be connected to the system bus by an appropriate drive interface known to one skilled in the art. In this manner, these drives and their associated computer-readable media provide nonvolatile storage of computer-executable instructions, data structures, program modules and other data for remote computer 60.

As with management system 12, remote computer 60 may receive commands and information through various input sources, such as keyboards, point devices, or other such input device known to one skilled in the art. Although only a single remote computer is depicted, remote computer 60 may take the form of one or more servers, routers, network PCs, peer devices, or other common network nodes, and remote computer 60 may include associated elements of management system 12, or other remote computers as described herein. Additionally, although remote computer 60 is represented as being connected to management system 12 through wide area network 62 and modem 66, it may be understood that remote computer 60 may communicate directly with signal input 18 without the need for the wide area network 62 and modem 66.

Referring now to signal input 18, if the signal on programming input line 22 includes multiple channels, management device 12 may include a tuner 70 that tunes to a selected channel of the signal. In other embodiments of the present invention, multiple tuners 70 are to provide enhanced viewing features, such as picture-in-picture, recording one channel while viewing another, and recording a plurality of channels simultaneously. A signal decoder 72, communicating with tuner 70, converts video data from an analog format to a digital format, or from a digital format to an analog format, when ASIC 38 and tuner 70 employ different formats. Signal decoder 72 also decodes video data from a compressed video format (e.g. MPEG). In embodiments where the management system 12 includes multiple tuners 70, management system 12 includes multiple signal decoders 72 to perform the operations disclosed herein.

As illustrated, management system 12 includes a video output 74, which may include a video encoder and/or a video converter. The video encoder assigns a code to each frame of video data transmitted across a video image link 32, and switches between analog and digital formats as desired. Similarly, audio output 76 includes an audio converter to provide the switching between analog and digital formats when needed.

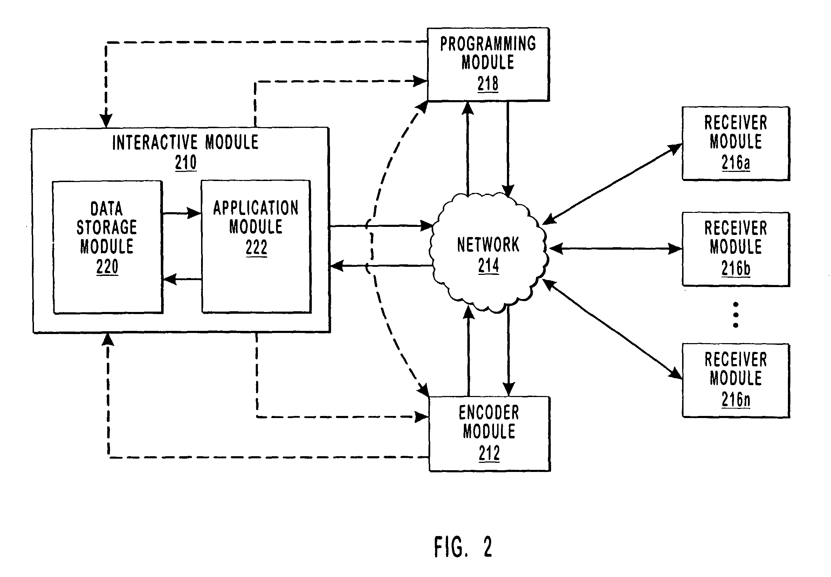

While Figure 1 and the corresponding discussion above provide a general description of a suitable environment in which the invention may be implemented, it will be appreciated that the features of the present invention disclosed herein may be practiced in association with a variety of different system configurations, such as that depicted in Figure 2.

Illustrated in Figure 2, is a schematic representation of a system 200 according to one embodiment of the present invention. System 200 depicts an exemplary enhanced programming system that facilitates the creation of enhanced programming by an interactive module 210 and the delivery of the enhanced programming to one or more receiver modules 216a-216n by an encoder module 212 for viewing by an individual watching the programming. Similarly, system 200 represents an enhanced programming system that may retrieve stored enhanced programming content and deliver the same to a viewer. As implied above, the enhanced programming includes television-programming generated by programming module 218 with interactive capabilities or other enhanced programming content, television-programming with additional non-interactive information or content, interactive web pages substituted for the television-programming, some combination thereof or additional content desired or known by one skilled in the art.

Typically, display of the enhanced programming occurs when a viewer watching the television programming via one of receiver modules 216a-216n requests enhanced programming content delivery in response to a broadcast that enhanced programming content is currently available with programming matched by the viewer. Stated another way, an enhanced programming experience is delivered to the viewer in accordance with a defined schedule initiated by a viewer's selection using input device 26.

System 200 delivers the enhanced programming content received by the one or more viewers without regard to the type of communication line connection or hardware and/or software modules used to deliver and view the enhanced programming experience. In this manner, system 200 provides an advance over the existing technologies that are hardware and/or software specific. For example, the format of and manner of delivery and display of typical enhanced programming content in these existing technologies is specific to the particular hardware and software modules associated with its creation, delivery, and display. In contrast, the present invention provides a generic or standardized enhanced programming schema, which is non-specific to hardware and software modules associated with authoring tools used to create the enhanced programming content or the receivers that deliver or display the enhanced programming content to the viewer. Furthermore, the enhanced programming schema defines a framework within which an author may develop enhanced programming content with the knowledge that such content is multi-platform compatible.

As shown in Figure 2, system 200 includes interactive module 210. Interactive module 210, in one embodiment, includes a data storage module 220 and an application module 222. Interactive module 210, in one configuration, functions to generate the enhanced programming content deliverable to receiver modules 216a-216n. Therefore, interactive module 210 represents one example of an authoring tool that allows enhanced programming authors to create enhanced programming content associated with typical audio and video television programming created by programming module 218. Furthermore, interactive module 210 may act as an interpreter of information stored within the schema of the present invention, and subsequently deliver the enhanced programming content to one or more receiver modules 216a-216n. Alternatively, interactive module 210 functions to prepare stored enhanced programming content for delivery to receiver module 216a-216n. For instance, interactive module 210 may collect the enhanced programming content from one or more servers, prepare such enhanced programming content in accordance with a stored schema, and prepare to deliver the content, such as formatting the enhanced programming content in accordance with a Transport A protocol, a Transport B protocol, or the like. Similarly, even though transport A and transport B protocols are discussed herein, various other communication protocols may be used to deliver enhanced programming content. Likewise, interactive module 210 may prepare the enhanced programming content for a satellite television network, a European based television network, for some other communication line connection or network.

As mentioned, interactive module 210 preferably prepares the enhanced programming content using a transport A protocol or a transport B protocol. Transport A protocol, as known by one skilled in the art, is a low speed communication protocol that delivers a trigger having a trigger data structure to receiver modules 216a-216n along the vertical blanking interval (VBI), captioning or text mode line, or subtitling line of the National Television Standard Committee (NTSC) defined signal. Outside the United States of America, the trigger may be delivered to receiver modules 216a-216n by an equivalent line based upon the Phase Altering Line (PAL) standard or the Sequential Couleur Avec Memoire or Sequential Color with Memory (SECAM) standard. The transport A protocol uses a first path to deliver one or more triggers to receive module 216a-216n, while using a second path, typically a connection to the Internet via a telephone line or some other communication line connection, to deliver the data requested by receiver module 216a-216n in response to the trigger. Hence, a two-way connection allows receiver modules 216a-216 to obtain the data identified by the trigger.

In contrast to the transport A protocol, the transport B protocol is network independent, such that receiver modules 216a-216n is not necessarily separately connected to the Internet to obtain data from the one or more data sources containing the enhanced programming content, as is the case with the transport A protocol. The transport B protocol initially delivers an announcement having an announcement data structure to identify the availability of enhanced programming. Subsequently, when the viewer desires an enhanced programming experience, the transport B protocol allows delivery of a trigger to activate display of the enhanced programming content and the data containing the enhanced programming content to receiver modules 216a-216n along a single path. Transport B is specifically designed to work over Internet Protocol networks of all types and in a uni-directional manner. Other protocols providing the similar facilities to Internet Protocol could be used as well. This invention is intended to work with all protocols and delivery systems that retain the information contained within the schema file. Optionally, transport B protocol accommodates a return path from receiver modules 216a-216n so that additional data may be accessed as needed.

To store enhanced programming content, and optionally other application software to facilitate receiving, creating, and delivering such enhanced programming content, interactive module 210 includes a data storage module 220. Data storage module 220, in one embodiment, is a database or other known data storage hardware and/or software module(s) that maintain one or more records, files, and fields of enhanced programming content, while allowing application module 222 access to such records, files, and fields. For instance, data storage module 220 may store the enhanced programming content developed through application module 222 or retrieved from some other data storage module(s). Data storage module 220 may also be implemented as one or more relational, hierarchical, hypertext, or distributed databases. Alternatively, data storage module 220 may be a magnetic hard disk, a removable magnetic disk, and an optical disk, such as a CD-ROM or other optical media, and the like.

In one embodiment, data storage module 222 contains various data structures, such as one or more announcement data structures, trigger data structures, package data structures, timeline data structures, carousel data structures, and the like, which define the enhanced programming content and manner by which such enhanced programming content may be delivered to the viewer as will be explained below. Alternatively, data storage module 222 may access enhanced programming content stored remotely from interactive module 210, while accessible by data storage module 220 and/or application module 222. Further, although a single data storage module 220 is illustrated, it may be appreciated by one skilled in the art that the present invention may use a plurality of data storage modules 220. The storage function of storage module 220 could also be accomplished by the inclusion of both the enhanced programming content, and the information contained in the schema file, in a single container format, such as a file. Such a file might then represent all of the data and information needed to create and deliver the enhanced television experience.

Communicating with data storage module 220 is application module 222. Application module 222, in one embodiment, controls the manner by which the enhanced programming content is prepared for delivery to receiver modules 216a-216n. In an alternate configuration, application module 222 represents a tool that aids an author with generating enhanced programming content. Consequently, application module 222 optionally assists authors to develop enhanced programming content within a standardized schema, while facilitating the transport of such enhanced programming content to receive modules 216a-216n via a variety of different programming and enhanced programming providers. Thus, application module 222 is configured to allow an author to create enhanced programming content within a standardized schema and know that the enhanced programming content is compatible with any hardware and/or software modules used by providers and viewers of the enhanced programming content. In this manner, the schema limits incompatibility problems between enhanced programming content and the hardware and/or software modules of various manufacturers and providers.

To assist with the delivery of the enhanced programming content to receiver modules 216a-216n, system 200 optionally includes an encoder module 212. Encoder module 212 communicates with interactive module 210 and programming module 218 through network 212, directly, as illustrated with dotted lines, or a combination thereof. As mentioned before, interactive module 210 acts as an interpreter of the information defined within the schema of the present invention, thereby allowing interactive module 210 to prepare the enhanced programming experience in accordance with one or more transport protocols. Encoder module 212, therefore, controls the manner by which the enhanced programming content, prepared by interactive module 210 for delivery by a Transport A protocol or Transport B protocol, is delivered to receiver modules 216a-216n. More specifically, in one embodiment, encoder module 212 controls the particular manner by which the encoded enhanced programming content is inserted onto the communication line between encoder module 212 and receiver modules 216a-216n, while facilitating delivery of the enhanced programming content created by programming module 218.

One skilled in the art may recognize that encoder module 212 may have various other configurations that are capable of performing the desired function. For example, although only a single encoder module 212 is depicted, one skilled in the art will recognize that multiple encoder modules 212a-212n can be used.

Encoder module 212 optionally communicates with receiver modules 216a-216n through network 214. Network 214 may be a television broadcast network, a satellite network, cable network, LAN/WAN, a wireless network, a packetized network, a real-time network, and various other networks known by one skilled in the art. Other networks are applicable so long as the network configuration and architecture allows communication between encoder module 212 and receiver modules 216a-216n and facilitates delivery of television programming and enhanced programming content to receive modules 216a-216n.

Communication between encoder module 212 and receiver modules 216a-216n, and optionally communication between all modules 210, 212, 216a-216n, and 218 may be achieved by a variety of communication line connections. For example, communication may be achieved through, such as but not limited to, cable or cable modems, satellite, telephone lines, whether analog or digitally based, the Internet, DSL, G-Lite, wireless technology, other high-speed data connections, or any other suitable transmission technology or medium. One skilled in the art may identify various other types of network and/or communication line connections that are capable of performing the desired function of allowing communication between modules 210, 212, 216a-216n, and 218.

It may be appreciated by one skilled in the art, that in some configurations of the present invention, system 200 is devoid of encoder 212 and optionally network 214. For example, in some other configurations, interactive module 210 is incorporated within one or more of receiver modules 216a-216n. Illustratively, when the file containing the XML schema of the present invention is incorporated within a removable storage media, such as a DVD, CD, magnetic disk, and the like each receiver module 216a-216n may interpret the XML schema and subsequently deliver the enhanced programming content to the viewer in accordance with such a XML schema. In another configuration, system 200 is devoid of encoder 212, while including interactive module 210, network 214, programming module 218 and receiver module 216a-216n. In such a case, the enhanced programming experience can be delivered to receiver module 216a-216n separately from the audio/video programming. For instance, a viewer may receive an XML file, or other appropriate file, containing the enhanced programming experience schema through an electronic mail message ("e-mail") or upon some storage device, whether optically read, magnetically read or the like. Such XML file is used with the audio/video programming created by programming module 218 and/or interactive module 210 to give a viewer an enhanced programming experience.

Each receiver module 216a-216n represents, in one embodiment, the various hardware and/or software modules that receive programming from programming module 218 and enhanced programming content from interactive module 210. For example, receiver module 216a-216n may include one or more set-top boxes, as described above with respect to home entertainment system 10. Each receiver module 216a-216n may, therefore, include one or more display devices 14 to present the viewer with the programming and/or the enhanced programming content. Each receiver module 216a-216n may take the form of management system 12 or home entertainment system 10, depending on the complexity of receiver module 216a-216n, as known by one skilled in the art. Alternatively, receiver module 216a-216n may be a computer that is configured with one or more tuners to allow delivery of a television broadcast and the enhanced programming content.

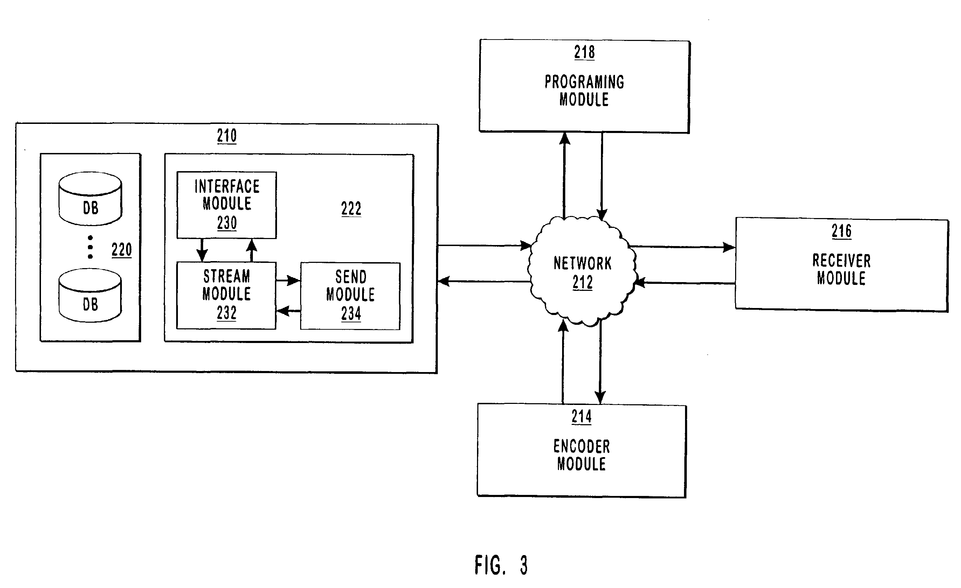

Referring now to Figure 3, a more detailed illustrative schematic representation of one embodiment of the present invention is depicted. To simplify the discussion contained herein, reference will be made to delivery of enhanced programming content to a single receiver module 216. Although the following discussion is specific to the configuration of the present invention with only one receiver module 216, one skilled in the art may recognize that the present invention may be incorporated within a system where multiple receiver modules 216a-216 deliver programming and enhanced programming content to the viewer. Additionally, other systems that may utilize the beneficial properties of the present invention may include multiple interactive modules, programming modules, encoder modules, and the like.

As shown, application module 222 of interactive module 210 includes an interface module 230 that allows an author of enhanced programming content or some other application to communicate with a stream module 232. Hence, interface module 230 may be a graphic user interface (GUI) that aids an author to develop the announcement (having an announcement data structure), trigger (having a trigger data structure), package (having a package data structure), a timeline (having a timeline data structure), carousel (having a carousel data structure), and other parameters used to define the enhanced programming content. Alternatively, interface module 230 may represent one or more application program interfaces (APIs) that an author may use to generate the enhanced programming content. Similarly, the APIs may allow other authoring tools to communicate with stream module 232 or may allow an author to generate an application that tracks the delivery of the enhanced programming content to receiver module 216. In yet another configuration, interface module 230 may retrieve stored enhanced programming content from data storage module 220.

In communication with interface module 230 is stream module 232. Stream module 232 represents various applications that may be used to generate the enhanced programming content, whether such content is newly created by an author via interface module 230 or stored content retrieved from a data source. For example, stream module 232 may represent a dynamic link library (DLL) that generates the enhanced programming content in accordance with the schema of the present invention or otherwise manipulates stored enhanced programming content retrieved via interface module 230. In another configuration

Stream module 232 facilitates use of the schema of the present invention, both by an author who may develop enhanced programming content to be delivered through the transport A protocol, the transport B protocol, or both the transport A and B protocols. Further, enhanced programming content developed in accordance with the schema of the present invention may be viewed under the NTSC, PAL, SECAM, or other standards for television and video transmission. In this manner, the present invention both provides a mechanism or tool that allows an author to create enhanced programming content that complies with the schema of the present invention, while optionally providing a mechanism or tool to prepare stored enhanced programming content for viewing at receiver module 216 as the enhanced programming experience.

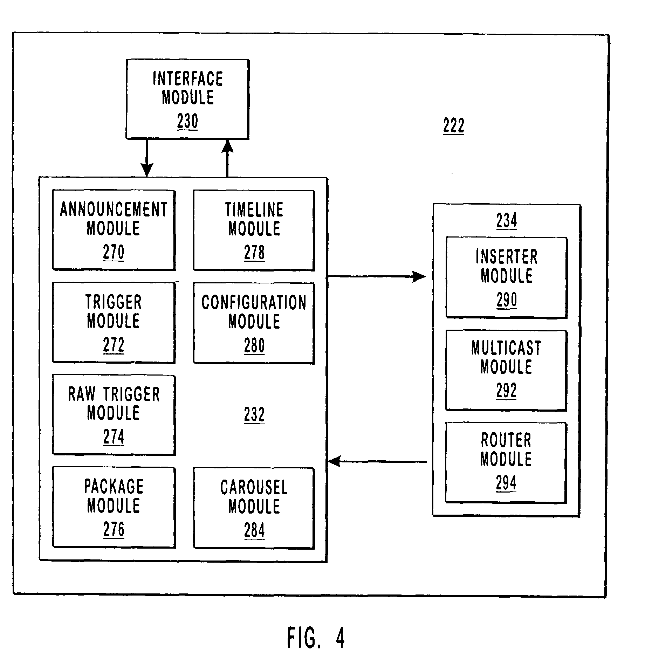

Referring now to Figure 4, a more detailed functional representation of stream module 232 is illustrated. As shown, stream module 232 includes a variety of functional modules, each of which represents one or more elements of the schema that is created or retrieved and manipulated by stream module 232. Such schema and the associated data structures related to the enhanced programming content, are preferably stored within an Extensible Markup Language (XML) schema stored with one or more files, records, and fields. Although reference will be made to the schema being incorporated within a XML schema, it may be appreciated by one skilled in the art that the present invention may be practiced using other schemas and other software languages, web based languages, and the like.

One module illustratively included within stream module 232 is an announcement module 270. Announcement module 270 aids the author of enhanced programming content with developing a broadcast that identifies the availability of enhanced programming content. For example, the announcement module 270 generates or retrieves an announcement element or announcement having an announcement data structure. Subsequently, announcement module 270 delivers the announcement to encoder module 214 in accordance with the other modules and functions of stream module 232, i.e., the timeline module or carousel module discussed hereinafter.

The announcement includes various elements (with associated attributes) that are defined by the author of the announcement, as well as default values or values dynamically created or modified by interactive module 210. In a preferred embodiment, the announcement includes one or more of the elements listed in Table 1.

**Table 1**

| Element | Description |
|---|---|
| sendingIP | Defines or optionally retrieves an internet protocol (IP) address of the hardware and/or software modules that deliver the enhanced programming. For example, the IP address may be a server that incorporates one or more of interactive module 210, encoder module 214, and/or programming module 218. |
| sessionID | Sets or optionally retrieves an identification to bind the announcement created by the announcement element to the particular programming created by programming module 218. |
| sessionversion | This indicates the particular version of the announcement delivered to receiver module 216. In this manner, receiver module 216 may identify whether it has received a current announcement. |
| sessionURL | This indicates a world-wide web uniform resource locator ("URL") where viewers may obtain additional information regarding the enhanced programming session that is currently available. |
| sessionlabel | This defines a human-readable name for the enhanced programming session that may be obtained through receiver module 216. |
| usemame | This identifies the owner of the enhanced programming session. |
| Uuid | This specifies the unique identifier (UUID), which identifies the enhanced programming. |
| Email | This defines the electronic mail message address at which the broadcaster of the enhanced programming may be contacted. This element may reference contact person information, such as name and address of the contact person, whether the address is a street address, post office box address, or some other address. |
| Phone | This defines a telephone number and name of the broadcaster of the enhanced programming. |
| Time | This defines the start and stop times for the enhanced programming session that is available. |
| maxcachesize | This provides an estimated maximum level of cache storage (in kilobytes) that may be required during the enhanced programming session. |
| secondstoend | This defines the number of seconds in the future for which the announcement is valid. |
| LangID | This specifies the default language for the enhancement session. |
| SDPlangID | This defines the language for the SDP session description. |
| Dataconfig | This element defines the transmission parameters for the data packages that are sent to receiver module 216 when a viewer requests the enhanced programming. For example, the transmission parameters may include the IP address from which the enhancement will be transmitted, the IP port where the enhancement will be transmitted, the maximum rate, in bits per second of the transmission, and the time to live for the packets. |
| triggerconfig | This specifies the transmission parameters for the triggers that are sent to deliver the enhanced programming to the viewer. In one embodiment, the transmission parameters are the same as the dataconfig element. |

Another illustrated functional module included in stream module 232 is a trigger module 272. Trigger module 272 defines a trigger having a trigger data structure that activates or initiates the delivery of enhanced programming content to receiver module 216 in response to a selection made by the viewer of receiver module 216. In this particular embodiment, trigger module 272 represents a trigger, or application that aids an author with the creation of the trigger. Alternatively, trigger module 272 may act to retrieve a trigger from a stored schema file, document, or data source and subsequently prepare the same for delivery to receiver 216.

The trigger, in one embodiment, includes and defines the name of the data to be sent as part of the enhanced programming experience and the communication protocol used to deliver the enhanced programming. For example, the trigger defines a source of the enhanced programming content and the delivery protocol to be used, such as transport A protocol, transport B protocol, or a combination thereof. Trigger module 272 aids an author with defining a variety of different elements and attributes associated with the trigger, such as those illustrated in Table 2.

**Table 2**

| Element | Description |
|---|---|
| TriggerURL | This defines the URL where the enhanced program may be obtained. The URL may be given in HTTP:\\, FTP:\\, or LID:\\ schemes. |
| Trigger | This optionally defines the name for the trigger. |
| Trigger Expires | This defines the date when the trigger will become invalid or expire if the client or viewer does not initiate the trigger. The trigger expiration date may be provided in a number of manners, such as year/month/date, hours/minutes/seconds, and the like. |
| Trigger Script | This defines a script fragment that may be executed within the currently running or playing enhanced programming. For example, if the trigger is activated when an HTML page is currently being displayed, the script either defined under the trigger script element or accessible by reference from the trigger script element may be displayed. |

As illustrated in Figure 4, stream module 232 optionally includes a raw trigger module 274. Raw trigger module 274 is adapted to define a trigger that has already been formatted by a different application and is to be sent to receiver module 216 without being reformatted. In this illustrative configuration, raw trigger module 274 represents a raw trigger generated by an author through either interface module 230 or a raw trigger retrieved from data storage module 220. The raw trigger includes a name attribute that defines the particular name of raw trigger module 274 and as an identifier of the particular transport protocol that will be used to deliver the raw trigger.

Stream module 232 may further include a package module 276. Package module 276 aids an author to define the data, such as enhanced programming content, deliverable to receiver module 216 upon activation or acceptance of the announcement. Package module 276, therefore, represents a package having a package data structure that defines the location of the actual enhanced programming content deliverable to receiver module 216. The package is generated by stream module 232 or retrieved by stream module 232 from data storage module 220.

Package module 276 or the package includes a variety of elements and associated attributes. In one embodiment, the package has a "name" attribute that defines the name of the package, a "content base" attribute that defines "the base URL" for the enhanced programming content to be delivered with the package, and an "expires" attribute that specifies when the package will expire. The "expires" attribute typically operates in a similar manner to that of trigger expire attribute discussed above.

Package module 270 may optionally include a file element and a directory element that each have a number of attributes associated therewith. The file element defines a file that may be delivered to receiver module 216 as part of the enhanced programming content. Generally, the file element includes the name of the file, a location of the file on a particular broadcaster's machine, such as data storage module 220 and/or programming module 218. Alternatively, the file element defines the location of the file on receiver module 216 when stored therein.

Further, the file element includes an expiration date that identifies when the file associated with the package will expire or when the file is no longer accessible. In addition, the file element optionally includes a language identification reference to the particular language of the data with the file and a decompress element that specifies whether or not the data from the file should be compressed or decompressed using a variety of formats, such as zip, and the like.

The directory element includes one or more of the above-referenced attributes, for example, a source location attribute that defines the location of the directory on interactive module 210 and/or programming module 218 that contains content to be delivered as part of the enhanced programming.

Other elements could be defined within the package element, such elements represent content in and of themselves. In one instance, these elements could be identical to well formed HyperText Markup Language or other markup languages appropriate for creating enhanced programming content.

According to another aspect of the present invention, stream module 232 optionally includes a timeline module 278. Timeline module 278, or the timeline having a timeline data structure, is generated by an author during development of the various other modules of stream module 232. Alternatively, the timeline module is dynamically created by stream module 232 as the various announcements, trigger, packages, and other elements or modules are retrieved from storage. The timeline defines when the announcements, triggers, packages, and the various other modules and associated elements of the present invention are to be delivered as part of the enhanced programming content. For example, if programming created by programming module 218 is a game show, timeline module 278 defines, in a sequential manner, when an announcement, when using the transport B protocol delivery, is to be delivered to receiver module 216. The announcement notifies the receiver of the availability of the enhanced programming events (in the form of triggers) and content (in the form of packages), and thereby requests the receiver to begin receiving this programming. When Triggers created by trigger module 272 and/or raw trigger module 274 are then delivered in the enhanced programming the receiver may at that time notify the viewer to the availability of enhanced programming and thereby requests a viewer to begin such an experience. Subsequent Triggers containing certain attributes will create events and action in the enhanced programming content. This can be used for synchronization between the audio/video and enhanced programming content. If the viewer wishes to "play along" with the participants in the game show, for example, by pressing a button on input device 26, the triggers created by trigger module 272 and/or raw trigger module 274 are activated and delivered to receiver module 216. Simultaneously, interactive module 210 delivers a package referencing and/or containing the package data created by package module 276. Alternatively, the package is delivered before or after the trigger is delivered to receiver module 216. The particular order in which the delivery occurs is defined the timeline created or prepared by timeline module 278.

The timeline defines the occurrences of data transmission through describing one or more events. Each event defines an operation or function of application module 272. For example, the timeline specifies that an event will occur at a specific time, where such event is the delivery of an announcement, trigger, package, and the like. The event time dictates a starting time, a stopping time, a deliver-by time, or optionally a time when all events are to cease for the particular enhanced programming content. Hence, application module 222 designates a specified period of time for delivery of each announcement, trigger, package, and the like. This permits interactive module 210 to dynamically organize delivery of the announcement, trigger, package, and the like within the defined period of time.

According to another aspect of the present invention, stream module 232 may include a configuration module 280. The configuration module 280 optionally defines the particular transport protocol used to deliver the announcements, triggers, packages, and the like. For example, configuration module 230 defines a configuration element having a configuration data structure that recites which transport protocol is to be used, such as via multi-cast delivery, inserter delivery, router delivery, or various other delivery manners known to one skilled in the art.

According to another aspect of the present invention, stream module 232 includes a carousel module 284. The carousel module 284 generates a carousel element having a carousel data structure or optionally to retrieve such carousel element from a storage source, such as data storage module 220. Configuration of the carousel element allows enhanced programming content to be delivered over a communication line connection and with hardware and/or software modules associated with the various European delivery devices and systems.

Generally, the carousel element defines the number of triggers, announcements, packages, and the like to be delivered to receiver module 216, without the aid of a timeline, such as that associated with timeline module 278. For instance, the carousel element may define that certain triggers, announcements, packages are to be sent in greater numbers than or before other triggers, announcements, packages, and the like. Delivery of the triggers, announcements, and packages is typically performed as quickly as interactive module 210, encoder module 212 and/or programming module 218 may achieve such delivery. Optionally, carousel module 280 may be configured to deliver the various elements, such as announcements, triggers, and packages, following a simulated timeline, and vice versa. Further, in another configuration, carousel module 280 may be configured to deliver the various announcements, triggers, and packages, by a deliver-by time.

Communicating with stream module 232 is send module 234. Send module 234 represents, in one embodiment, a send.DLL that is configured to deliver the announcements, triggers, packages, and the like to receiver module 216. Send module 234, as illustrated in Figure 4 may include an inserter module 290 and a multi-cast module 292, and optionally a router module 294. Depending on the particular transportation protocol used to deliver the enhanced programming content, send module 234 may activate either inserter module 290, multi-cast module 292, or router module 294. For example, when a trigger is delivered to receiver module 216 via the transport A protocol, send module 234 uses inserter module 290 to insert enhanced programming content onto the VBI or some other channel of the communication line connection. Therefore, inserter module 290 performs various functions to achieve delivery of the enhanced programming content to receiver module 216. For example, inserter module 290 obtains a signal from programming module 218 and/or encoder 214 and the enhanced programming from interactive module 210 and organizes for delivery of one or more triggers defined within the schema to receiver module 216. Alternatively, when using transport B protocol, send module 234 delivers announcements, triggers, and packages by a combination of inserter module 290, multi-cast module 292, or router module 294.

Although the discussion above has been referenced to a stream module 232 that includes various separate and optionally distinct modules 270-284, one skilled in the art may appreciate that the functions of each module 270-284 may be incorporated within a single module. Further, the above-described modules may be incorporated within programming module 218 or encoder module 210 to deliver previously created enhanced programming content to receiver module 216. Hence, the above modules both function as authoring tools and optionally delivery tools for the delivery of the enhanced programming content to receiver module 216.

Following is a discussion of two exemplary schemas that deliver animated enhanced programming content and experience to a viewer. Initially, discussion will focus on a schema that allows delivery of enhanced programming content through a transport A protocol. Following such a discussion, the same animated enhanced programming content will be discussed with reference to delivery via a transport B protocol. It may be understood by one skilled in the art that the schemas described herein are only illustrative of possible schemas and should not be considered limiting the scope of the appended claims. Further, although reference is made to schemas that specify use of a particular transport protocol, e.g., transport A protocol or transport B protocol, to deliver the enhanced programming content, the present invention facilities defining both transport A protocol and transport B protocol within the same schema.

The illustrated schemas of the present invention may be incorporated within an XML schema, such as in an XML file or document. Therefore, the XML schema provides a framework within which authors may develop enhanced programming. The framework allows the author to independently create enhanced programming content with the knowledge that the announcements, packages, triggers, timelines, carousels, and other elements that he or she defines will be compatible with existing and future delivery hardware and/or software modules. As mentioned above, the illustrated XML schemas can include one announcement zero or more packages, zero or more triggers, zero or more raw triggers, zero or one timeline, and the like. Each has its associated elements and attributes as commonly understood by those skilled with XML in view of the teaching contained herein.

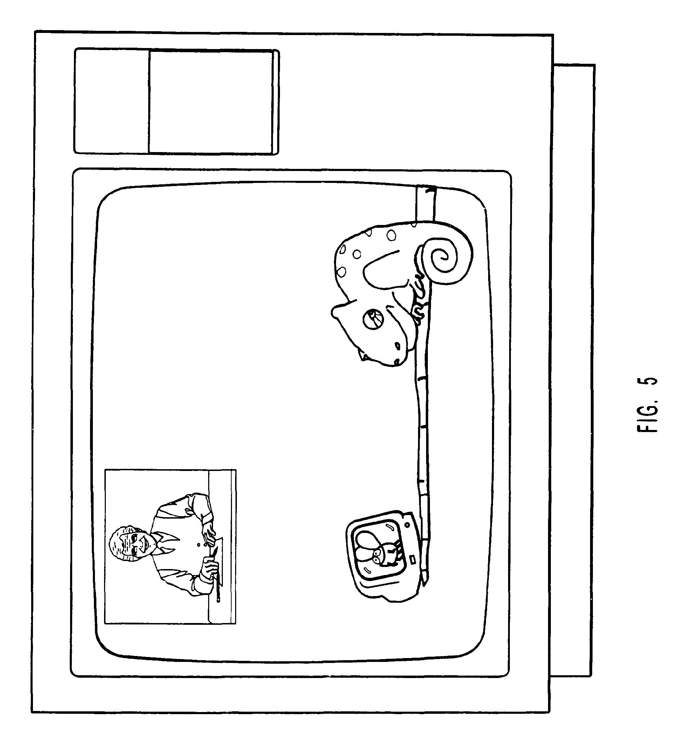

The following schema provides the information that interactive module 210 uses to provide enhanced programming content to a viewer of receiver module 216. The illustrative schema, when correctly used with an enhanced programming system produces an animation-like result on display device 14, such as a television. The schema defines a trigger that launches an HTML page that reduces the television viewing area to the upper left corner and displays an image of a lizard in the remaining screen space, as illustrated in Figure 5. The additional triggers of the illustrative schema animate the lizard image on the screen while leaving the television viewing area unchanged. Specifically, one illustrative schema recites:

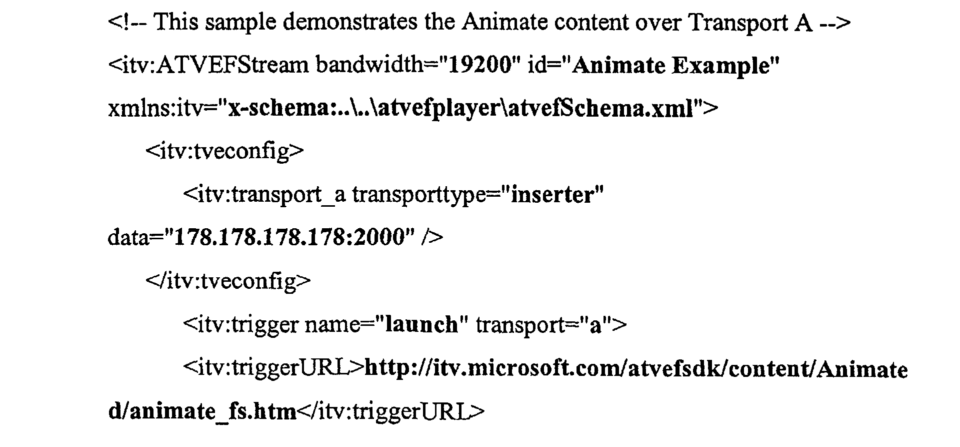

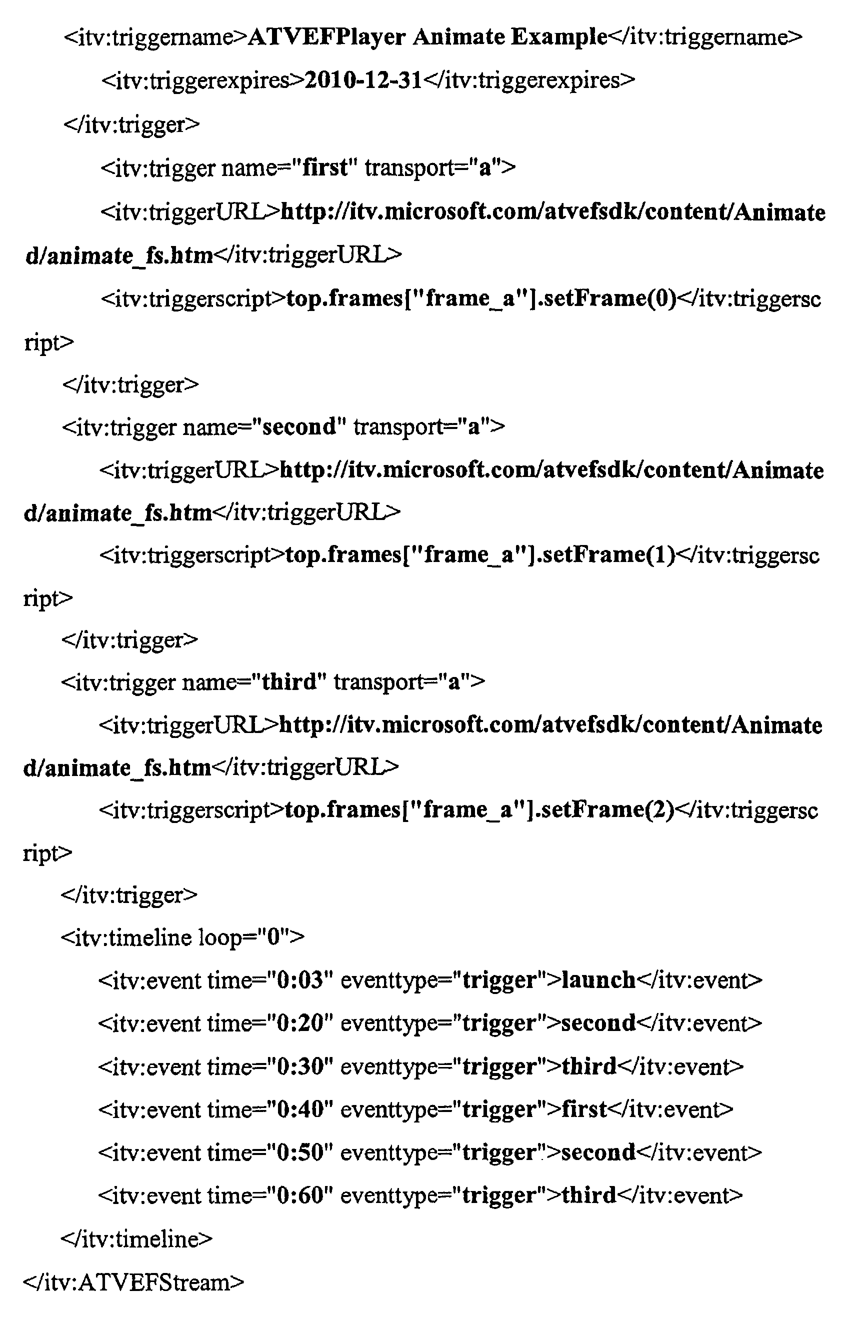

Initially, the schema defines the base tag for the interactive television experience. In this illustrative example, the base tag is termed ATVEFStream, such as that described above. The ATVEFStream tag, considered as a stream element associated with stream module 232, has attributes associated with the bandwidth that the enhanced programming content is to be delivered over the communication line connection. Such bandwidth is illustrated or defined as 19200 baud; other bandwidths are applicable and known to one skilled in the art. Further, the ATVEFStream tag includes an identification or I.D. attribute designating the name of the enhancement stream by which system 200 (Figure 2) delivers the enhanced programming content. Finally, the ATVEFStream tag includes, optionally, a reference to another schema that is used to validate the authenticity of this particular XML schema. Such validation schema may include a numerical value or, such as in this case, reference to a stored schema file.

Following designation of the base tag, the configuration information used to transmit the enhanced programming content is defined within the tveconfig element similar to the configuration element associated with configuration module 280. Since the above defined illustrative example is a transport A delivery system, the transport type is inserter, designating "inserter" module 290 as the delivery module used to transmit the enhanced programming content to receiver module 216. In addition, the tveconfig element defines the configuration used when transmitting the enhanced programming content, such as an IP address. Such configuration information may or may not be used by interactive module 210 depending on its mode of configuration for use with encoder module 212.

Subsequent to defining the configuration for delivery of the enhanced programming content, the sample schema defines a plurality of triggers associated with the delivery of the enhanced programming content. For example, this illustrative example includes a launch trigger, a first trigger, a second trigger, and a third trigger. As mentioned above, each trigger includes a name that the base tag uses to refer to the particular triggers. Further, each trigger includes a designation of the type of transport used to delivery the enhanced programming content. As shown, the launch trigger includes a trigger URL that designates the location where the data associated with this trigger is stored. In some situations, an expiration date is included that defines when the link or trigger is to expire and will no longer activate or begin an enhanced programming experience on a receiver module 216a-216n. In some other situations, a trigger script is included that defines a script fragment that is executed within the enhanced programming content is delivered to receiver module 216. For example, for the second trigger, the trigger ECMAscript references "frame_a" at the top of the frame of the animated programming.

Finally as illustrated in the above-referenced exemplary schema, the timeline is included to control when each trigger is to be delivered, which order the triggers are to be delivered, and how many of the triggers will be delivered launched. In this particular configuration, the timeline element includes a loop attribute that is defined as zero, to reference that the present timeline does not loop to deliver the enhanced programming content multiple times to receiver module 216. Various other values may be included within the loop attribute as known by one skilled in the art. The timeline further includes a number of events designating a delivery time, relative to the start time when each event is to be delivered to receiver module 216. The time may designate the hours, minutes, seconds, and optionally video frames after the commencement of the enhanced programming experience is desired to deliver a particular element, such as the triggers.

It would be appreciated by one skilled in the art, that various other configurations of the schema of the present invention might be implemented to provide a viewer with an enhanced programming experience, no matter the type of system being used to deliver the enhanced programming experience. Additionally, the schema may allow and provide an enhanced programming author a framework within which they may design and prepare enhanced programming.

Following hereinafter is another configuration of an illustrative schema to deliver the animated enhanced program experience illustrated in Figure 5. This particular illustrative schema, however, uses a transport B protocol to deliver the enhanced programming. Specifically, the illustrative schema recites:

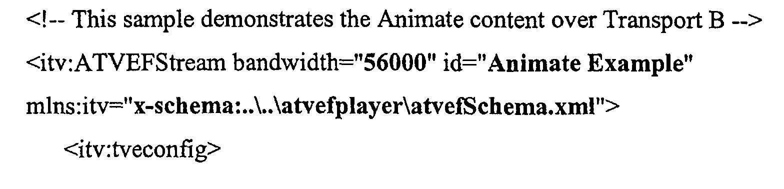

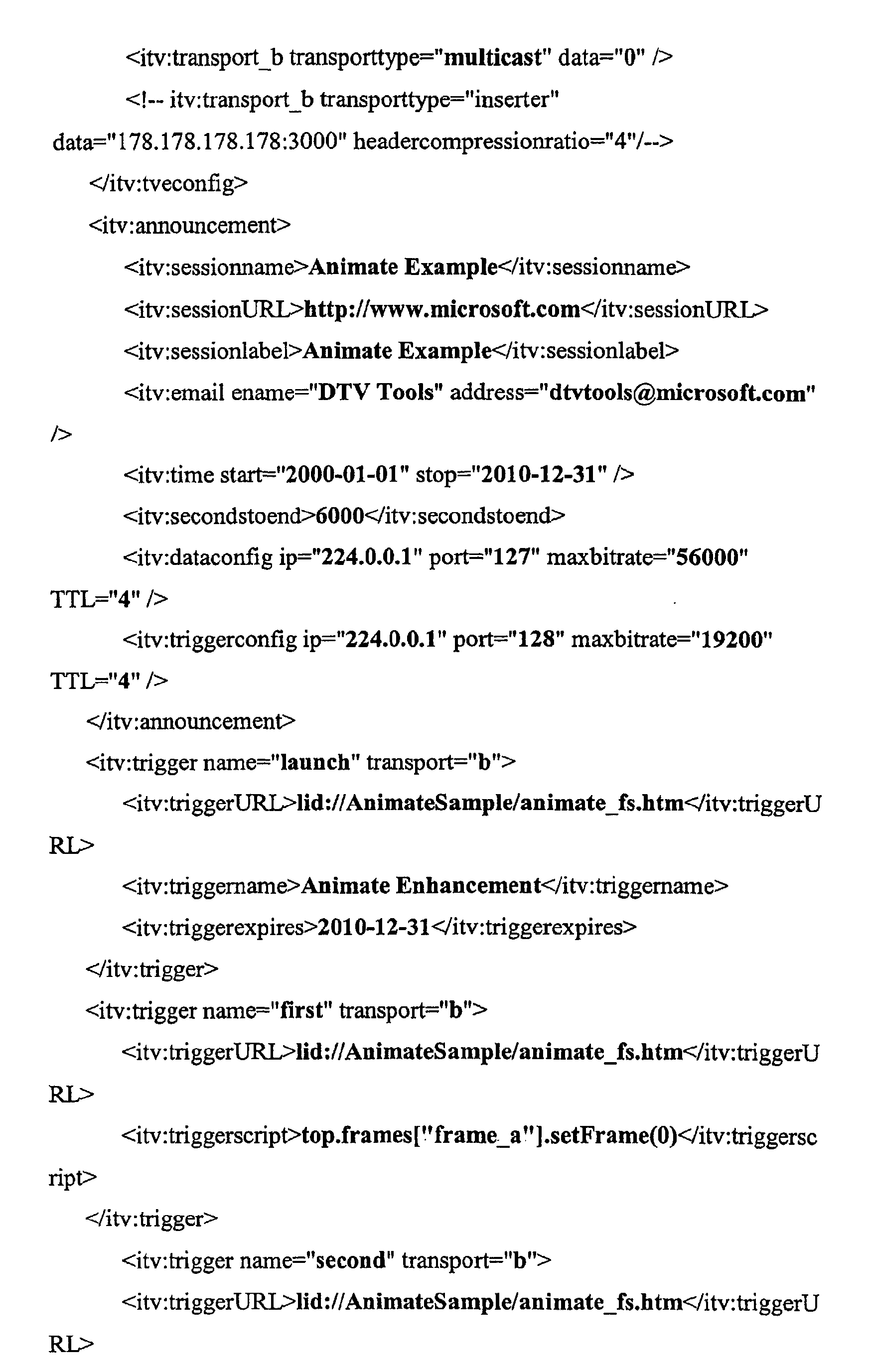

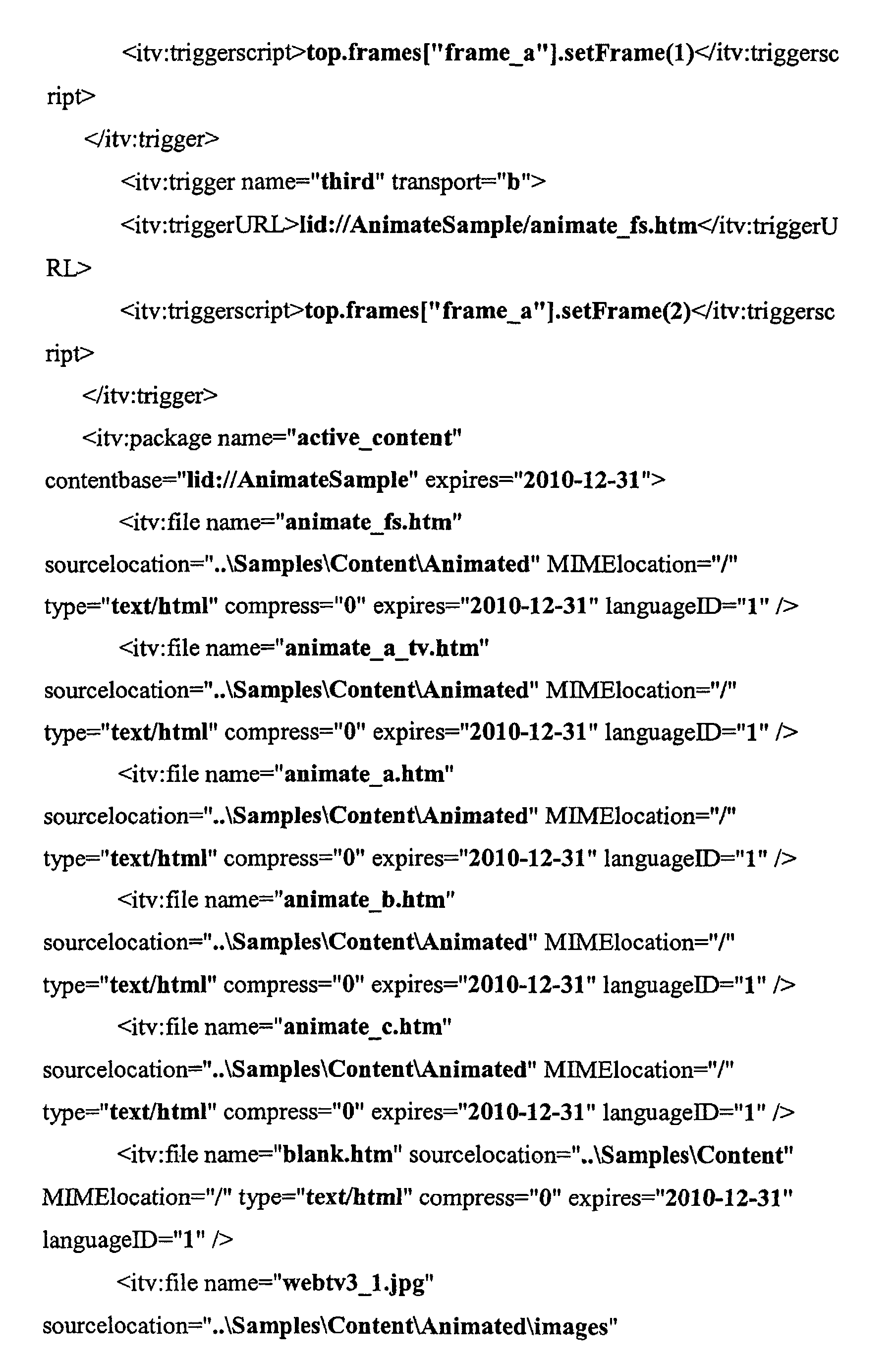

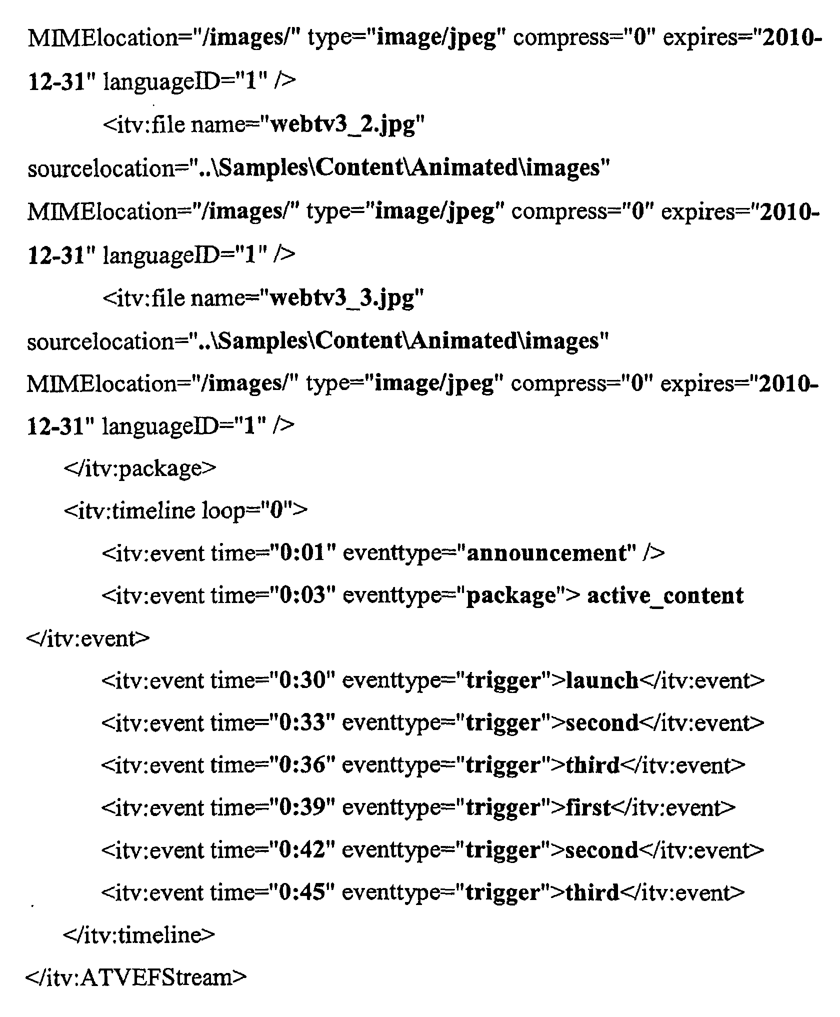

The schema described above includes similar elements described with respect to the transport A animate illustrative example. There are, however, significant differences between the two schemas. For example, the tveconfig element defines the transport configuration as a multicast type transport configuration, rather than as an inserter type delivery. The tveconfig, transport type, attribute may have a value of multicast, inserter, or router, thereby defining the type of connection used to transmit enhanced programming. As illustrated, the tveconfig element includes a header compression ratio attribute, having a value of 4. This attribute defines how often uncompressed headers for Internet Protocol datagrams are to be sent to receiver module 216 according to a compression algorithm for unidirectional datagram transmission.

As illustrated above, enhanced programming content delivered by a transport B protocol includes an announcement, optionally generated or retrieved by announcement module 270 and/or intervention module 210. The announcement, as described above, includes information related to the availability of the enhanced programming content. For example, the session name for this particular announcement may be "animate example," while the various URLs and labels associated with this announcement are designated appropriately in the above-referenced schema. With respect to the dataconfig attribute, an IP address may be defined with the appropriate port and maximum bit rate for transfer of enhanced programming. Further, the dataconfig attribute may include a time-to-live (TTL) designation for the Internet Protocol datagrams making up the transmission format and as understood by someone familiar in the art.

Another significant difference between the schemas discussed with respect to transport A protocol and this particular schema is the designation of zero or more packets or packages that contain the enhanced programming. For example, the package illustrated in the above schema is designated with a name "active_content." The base URL for the content of such package in the receiver module 216 (i.e., storage module 48 or 50) is identified as lid:\\AnimateSample and is designated to expire from the receiver module 216 (i.e., storage modules 48 or 50) in 2010-12-31. Such a package, as illustrated, includes: (i) various files each with different names and associated source location information of when the file is stored on an interactive module 210 and/or programming module 218, (ii) the location of the file on receiver module 216 relative to the package content base, designated by MIMElocation, (iii) whether or not the data should be delivered compressed and required to be uncompressed, where a value of "zero" represents "no," while a reference value of "one" represents "yes." An expiration date and a language identification value, where one is the default value for the English language, may also be included with the attributes of the package element.

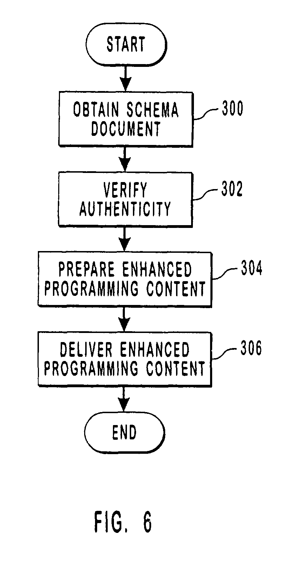

Referring now to Figure 6, an illustrative flow diagram representing or depicting the creation and delivery of a schema file or document in accordance with the present invention as depicted. Initially, as depicted by block 300, application module 222 retrieves a schema document from data structure module 220. This may be initiated by delivery of programming that has enhanced programming content included therein, such as an announcement, which provides a viewer with an enhanced programming experience. For example, when programming module 218 incorporates both interactive module 210 and encoder module 212, an author may associate a specific schema document, with associated enhanced programming content, with the programming created by programming module 218.

Before delivery of the programming and/or the enhanced programming content, or optionally simultaneously with the delivery of programming, interactive module 210, and/or application module 222 verifies the authenticity of the schema document, as depicted by block 302. This may be achieved in a variety of manners, such as comparing the structure, configuration or format of the schema document against a standardized schema document, stored in data storage module 220.

Once the schema document has been verified, application module 222 organizes the enhanced programming content described or defined by the schema document in preparation for delivery to receiver module 216, as depicted by block 304. This may be accomplished by announcement module 270 preparing the announcement, trigger module 272 preparing the trigger, package module 276 preparing the package, and timeline module 278 and/or carousel module 284 organizing the announcements, triggers, and packages in accordance with a defined timeline or carousel, optionally contained within the schema document. Such preparation, is illustratively depicted in Figure 6 by block 304.

Following preparation of enhanced programming content, and associated timeline and/or carousel, system 200 begins to deliver the programming to receiver module 216. In accordance with the timeline, which may be "zeroed" to the beginning time of the programming, application module 222, and more specifically send module 234, retrieves the announcements, triggers, packages, and delivers the same via inserter module 290, multicast module 292, or router module 294 to receiver module 216 by way of encoder module, as illustrated by block 306.

Alternatively, instead of selecting or retrieving a stored schema document from some data source, such as data storage module 220, interactive module 210 aids an author with the creation of enhanced programming content associated with programming generated by programming module 218. For example, as described previously, an author, optionally simultaneously with the delivery of programming to receiver module 216, generates enhanced programming content using application module 222. The author uses interface module 230 in combination with stream module 232 to create a schema document with the appropriate announcements, triggers, packages, timelines, and other elements and data, with associated attributes, to deliver enhanced programming content to a viewer or receiver module 216.

In still another situation, once the author has created the enhanced programming content and associated schema document, the author may save the schema document and the associated enhanced programming content in data storage module 220 for further access, using the method described with respect to Figure 6, or some other method known by one skilled in the art.

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes which come within the meaning and range of equivalency of the claims are to be embraced within their scope.

## Claims

1. A method for delivering enhanced programming content to a receiver that displays the enhanced programming content to a viewer, the method comprising:
retrieving a schema document, the schema document comprising at least one instruction for the delivery of enhanced programming content;
analyzing the at least one instruction to retrieve a timeline for the delivery of the enhanced programming content to the receiver, and
in response to the timeline, delivering the enhanced programming content to the receiver for display to the viewer.

2. The method as recited in claim 1, further comprising:
creating a schema document, the schema document comprising at least one of i) a trigger data structure, ii) an announcement data structure, iii) a package data structure, iv) a timeline data structure, and v) a carousel data structure;
wherein the timeline represents the timeline data structure, the timeline data structure comprising an event controlling the delivery of the enhanced programming content to the receiver; and
delivering the enhanced programming content comprises delivering the enhanced programming content to the receiver when the event occurs.

3. The method as recited in claim 2, further comprising:
a) viewing television programming deliverable to the receiver; and
b) in response to viewing the television programming, creating the schema document associated with the television programming.

4. The method as recited in one of the claims 1 to 3, wherein retrieving the schema document comprises retrieving the schema document from a repository containing a plurality of schema documents.

5. The method as recited in one of the claims 1 to 4, wherein creating the schema document comprises creating the schema document with an authoring tool.

6. The method as recited in one of the claims 1 to 5, wherein the enhanced programming content comprises at least one of an announcement element, a trigger element, and a package element.

7. The method as recited in one of the claims 1 to 6, wherein delivering the enhanced programming content comprises delivering the enhanced programming content in an order selected from the group consisting of a sequential order and an asynchronous order, and/or synchronizing the enhanced programming content with television programming, and/or delivering the enhanced programming content with a communication protocol, and/or delivering the enhanced programming content before a deliver-by time, defined in the schema document, and/or delivering the enhanced programming content by a start time defined in the schema document.

8. The method as recited in claim 7, wherein the communication protocol is selected from the group consisting of i) a transport A protocol and ii) a transport B protocol.

9. The method as recited in one of the claims 2 to 8, wherein the timeline data structure functions as the carousel data structure.

10. The method as recited in one of the claims 2 to 8, wherein the carousel data structure functions as the timeline data structure.

11. The method as recited In claim 2, wherein delivering the enhanced programming content to the receiver comprises:
delivering an announcement signal comprising the announcement data structure to the receiver, the announcement signal identifying the availability of enhanced programming content to the receiver;
delivering a package comprising the package data structure to the receiver, the package identifying the enhanced programming content;
delivering a trigger signal comprising the trigger data structure to the receiver, the receiver notifying the viewer of the availability of enhanced programming content; and
in response to a selection by the viewer to receive the enhanced programming content, displaying the enhanced programming content to the viewer.

12. The method as recited in claim 11, wherein the package comprises at least one file containing the enhanced programming content or at least one link to the enhanced programming content.

13. The method as recited in claim 11 or 12, wherein the trigger comprises at least one link to the enhanced programming content identified in the package.

14. The method as recited in one of the claims 11 to 13, wherein the at least one user action comprises accepting a notification displayed to the viewer of the availability of enhanced programming content.

15. A method for delivering enhanced programming to a receiver as defined by a schema document, the method comprising:
creating a schema document comprising at least one of i) a trigger data structure, ii) an announcement data structure, Iii) a package data structure, iv) a timeline data structure, and v) a carousel data structure;
retrieving the schema document,
generating a timeline from the schema document, the timeline defining the schedule for sending the at least one of the data structure to the receiver; and
delivering the at least one of the announcement, the trigger, and the package to the receiver following the schedule.

16. The method as recited in claim 15, further comprising verifying the schema document against a stored verification document.

17. The method as recited in claim 15 or 16, further comprising delivering programming to the receiver, the programming containing at least one of i) the announcement, ii) the trigger, and iii) the package.

18. The method as recited in one of the claims 15 to 17, wherein the document comprises an XML document.

19. The method as recited In one of the claims 15 to 18, wherein generating a timeline comprises defining at least one element for each announcement, trigger, and package.

20. A computer-readable medium having a plurality of data fields stored on the medium and representing data structures for delivering enhanced programming content to a receiver, comprising:
a first data field containing data representing the availability of enhanced programming content;
a second data field containing data representing the location of the enhanced programming content;
a third data field containing data representing at least one trigger, the at least one trigger controlling the delivery of the enhanced programming content; and
a fourth data field containing data representing a timeline, the timeline controlling the delivery of the first data field, the second data field, and the third data field to the receiver.

21. The computer-readable medium as recited In claim 20, wherein the first data field comprises an announcement, the announcement comprising an announcement data structure; and/or the second data field comprises a package, the package comprising a package data structure; and/or the third data field comprises a trigger, the trigger comprising a trigger data structure.

22. The computer-readable medium as recited in claim 21, wherein the package comprises at least one of i) a file of enhanced programming content and ii) a link to a file of enhanced programming content.

23. The computer-readable medium as recited in claim 20 or 21, wherein the timeline controls at least one of i) a starting time for delivering the enhanced programming content to the receiver and ii) a stopping time for delivering the enhanced programming content to the receiver; and/or a time, the time defining when delivery of the enhanced programming content to the receiver is to be completed.

24. The computer-readable medium as recited In one of the claims 20 to 22, wherein the timeline acts as a carousel.

25. A system for providing television programming and enhanced programming content that is capable of being displayed on a variety of receivers, the system comprising:
an interactive module configured to create at least one schema document, the schema document being configured to define the enhanced programming content in a standardized configuration, the schema document comprising at least one of i) a trigger data structure, ii) an announcement data structure, iii) a package data structure, iv) a timeline data structure, and v) a carousel data structure;
an encoder module, in communication with the interactive module, configured to encode the enhanced programming content, in response to the configuration of the timeline data structure, onto a communication line containing the television programming; and
a receiver module, In communication with the encoder module, for receiving the enhanced programming content and displaying the enhanced programming content to a viewer.

26. The system as recited in claim 25, wherein the interactive module comprises:
a data storage module configured to store the at least one schema document; and
an application module configured to retrieve the at least one schema document and the enhanced programming content defined in the at least one schema document.

27. The system as recited in claim 25 or 26, wherein the interactive module comprises:
an interface module configured to receive requests for modifications to the schema document;
a stream module configured to modify the schema document following the requests received by the interface module; and
a send module configured to manipulate the schema document and the enhanced programming content for delivery to the receiver.

28. The system as recited in claim 25 or 26, wherein the interactive module comprises:
an interface module configured to receive requests to generate a schema document, the schema document defining the enhanced programming content deliverable with the television programming;
a stream module configured to generate the schema document in response to the requests received by the interface module; and
a send module configured to deliver the enhanced programming content to the receiver module.

29. The system as recited In one of the claims 25 to 28, wherein the communication line comprises a plurality of different channels, a first channel preferably being configured to transport the television programming to the receiver and a second channel preferably being configured to transport the enhanced programming to the receiver, the first channel and the second channel being different channels.

30. A computer product for implementing a method for providing enhanced programming content defined within a schema document to a viewer of a receiver module, comprising:
a computer readable medium carrying computer-executable Instructions for implementing all the steps of the method according to any one of claims 1 to 19, when run on a computer.
